# FASCICULE DE BREVET EUROPEEN

(11) **EP 2 244 872 B1**
(45) Date de publication et mention de la délivrance du brevet: **20.03.2013**
(21) Numéro de dépôt: 09710522.5
(22) Date de dépôt: 13.02.2009
(51) Int. Cl.: B29C 41/06, B29C 41/38, B29C 41/46, B29C 33/04, B29C 35/04, B29C 35/16

(54) **DISPOSITIF DE MOULE POUR MACHINE DE ROTOMOULAGE ET MACHINE DE ROTOMOULAGE LE COMPRENANT.**
FORMWERKZEUG FÜR EINE ROTATIONSFORMMASCHINE UND ROTATIONSFORMMASCHINE MIT EINEM SOLCHEN FORMWERKZEUG
MOULD DEVICE FOR ROTATIONAL MOULDING MACHINE AND ROTATIONAL MOULDING MACHINE INCLUDING SAME

(30) Priorité: 14.02.2008 FR 0850959
(43) Date de publication de la demande: 03.11.2010
(73) Titulaire: RAIGI, 28310 Janville (FR); Commissariat à l'Énergie Atomique et aux Énergies Alternatives, 75015 Paris (FR)
(72) Inventeur: BARRIOL, Jean-Louis, 45000 Orleans (FR); PERRIER, Olivier, 45170 Neuville Aux Bois (FR); MAZABRAUD, Philippe, 45000 Orleans (FR); NONY, Fabien, 37260 Monts (FR)
(74) Mandataire: Ilgart, Jean-Christophe
(86) Numéro de dépôt international: PCT/EP2009/051725
(87) Numéro de publication internationale: WO 2009/101183

(56) Documents cités:
- EP-A- 1 114 707
- FR-A- 1 182 285
- FR-A- 1 580 487
- US-A- 4 327 045

## Description

### DOMAINE TECHNIQUE

L'invention concerne un dispositif de moule pour machine de rotomoulage.

L'invention concerne en outre une machine de rotomoulage comprenant au moins un tel dispositif de moule.

Le domaine technique de l'invention peut, de manière générale, être défini comme celui du rotomoulage de pièces.

### ÉTAT DE LA TECHNIQUE ANTÉRIEURE

Le rotomoulage de pièces comprend tout d'abord généralement une étape de remplissage du moule avec le matériau que l'on souhaite mouler, par exemple sous la forme d'une poudre, notamment dans le cas où ce matériau est un polymère thermoplastique, ou avec les précurseurs de ce matériau, notamment dans les cas où l'on procède au rotomoulage réactif d'un polymère thermodurcissable tel que le polyuréthane.

On chauffe ensuite le moule jusqu'à la température de fusion du matériau ou à la température de réaction des précurseurs tout en animant le moule d'un mouvement de rotation autour de deux axes généralement perpendiculaires, ce qui provoque un dépôt uniforme du matériau sur les parois du moule.

Puis, on refroidit le moule pour solidifier ou rigidifier le matériau.

Enfin, on ouvre le moule et on récupère la pièce moulée.

La description qui précède montre l'importance dans le rotomoulage des moyens de chauffage et de refroidissement dont doit être pourvu le moule.

Ainsi certaines machines de rotomoulage sont équipées d'un serpentin ou d'un réseau de tubulures usinées, intégrés dans la paroi même du moule, dans lesquels circule un fluide caloporteur permettant de chauffer le moule pour atteindre par exemple la température de fusion d'un matériau thermoplastique ou la température de polymérisation des précurseurs d'un polymère tel que le polyuréthane, puis de le refroidir pour permettre le démoulage de la pièce sans déformation. On peut faire circuler par exemple successivement de l'huile chaude puis froide, ou bien de l'eau chaude en phase vapeur ou liquide puis froide, dans le serpentin.

Un tel moule de rotomoulage équipé de serpentins et de réseaux usinés intégrés dans ses parois est complexe à réaliser et est d'un coût élevé.

De même, toute modification de ce type de moule entraîne des opérations complexes et onéreuses. Ainsi, un changement même minime à apporter à la forme de la pièce que l'on souhaite fabriquer oblige à fabriquer un nouveau moule et les serpentins et tubulures de chauffage et de refroidissement qui en font partie intégrante.

Enfin ces moules présentent une forte inertie thermique et leurs temps de cycle sont encore trop longs.

Dans d'autres machines de rotomoulage appelées machines de rotomoulage à carrousel, les moules sont placés sur un carrousel rotatif et déplacés successivement depuis une zone de chargement et de fermeture des moules, à une zone de chauffage constituée par un four, et à une zone de refroidissement comprenant une enceinte ou un tunnel dans lesquels on pulvérise de l'eau et on la projette sur les moules au moyen d'un ventilateur.

L'efficacité thermique d'une telle machine n'est pas satisfaisante.

En outre, notamment dans le cas du rotomoulage de pièces en polyuréthane, le refroidissement à l'aide d'un brumisateur externe, même en prévoyant un système d'aspiration, entretient une atmosphère fortement humide, néfaste à la qualité des pièces ou la durabilité des équipements.

L'eau réagit avec les isocyanates précurseurs du polyuréthane, qui moussent, perturbant ainsi gravement le procédé de rotomoulage.

Dans les dispositifs précités la température des moules n'est pas toujours homogène ce qui entraîne des risques de défaut sur la pièce.

Par ailleurs, le document FR-A-1 580 487 [1] décrit une machine de rotomoulage dite « à chambre embarquée » qui est essentiellement conçue pour des matières thermoplastiques telles que le polyéthylène et le PVC.

Cette machine comprend un dispositif de moule avec des carters de moule ouverts à une extrémité et supportés en rotation sur des tourillons.

Ces carters de moule contiennent des moules comprenant des cavités de moule, dont le chauffage ou le refroidissement est assuré par l'intermédiaire de chambres de chauffage ou de refroidissement alimentées en fluide de chauffage et en fluide de refroidissement. Les conduits d'alimentation et d'évacuation en fluide de chauffage et en fluide de refroidissement sont les mêmes et il n'existe pas de circuits différents respectivement pour l'alimentation en fluide de chauffage et l'alimentation en fluide de refroidissement.

Il semble que le système de circulation de fluide soit totalement fermé et qu'un réservoir d'expansion soit prévu pour permettre la dilation et la contraction du fluide circulant, ce qui montre qu'un seul et même fluide porté à différentes températures circule dans un même circuit pour chauffer et refroidir les moules.

Le document FR-A-1 182 285 [2] décrit une machine de rotomoulage de matières plastiques qui comprend deux axes de rotation et au moins un moule à double enveloppe solidaire du second de ces axes. Une conduite unique d'amenée de fluide est reliée à une canalisation qui se divise en branches pour alimenter en fluide l'espace situé entre les deux enveloppes.

Le fluide est évacué par des canalisations qui se rassemblent en une seule canalisation débouchant dans une conduite de retour de fluide.

Dans ce document, le fluide, qu'il soit froid ou chaud est évacué par le même circuit. Les circuits d'alimentation en fluide de chauffage et en fluide de refroidissement ne sont pas distincts, différents, séparés, mais confondus.

Aussi bien dans le document [1] que dans le document [2], le fluide chaud et le fluide froid empruntent le même cheminement. De ce fait, un temps considérable est perdu pour évacuer le fluide chaud, chassé par le fluide froid. Les dispositifs des documents [1] et [2] conviennent pour des temps de cycles longs, par exemple voisins d'une heure, et donc des matériaux thermoplastiques, mais non pour des temps de cycles courts, par exemple voisins de 5 minutes, et des matériaux thermodurcissables, notamment des polymères réactifs liquides.

Il existe donc au regard de ce qui précède un besoin pour un dispositif de moule pour machine de rotomoulage de pièce qui soit simple, fiable, facile et économique à fabriquer à mettre en oeuvre.

Il existe encore un besoin pour un tel dispositif qui puisse être adapté facilement, économiquement, et rapidement à la forme de la ou des pièce(s) à rotomouler.

Il existe aussi un besoin pour un tel dispositif qui présente une faible inertie thermique réduisant ainsi les temps de cycle et entraînant un gain de productivité.

En d'autres termes, il existe un besoin pour un dispositif qui assure des cycles de chauffe et de refroidissement très rapides.

En particulier, il existe un besoin pour un dispositif permettant des cycles de chauffe et de refroidissement plus courts que ceux des dispositifs des documents [1) et [2].

Il existe enfin un besoin pour un dispositif de moule pour machine de rotomoulage qui assure l'homogénéité de la température des pièces au cours de toutes les phases du procédé.

### EXPOSÉ DE L'INVENTION

Le but de la présente invention est de fournir un dispositif de moulage de pièces qui réponde entre autres aux besoins énumérés ci-dessus.

Le but de la présente invention est en outre de fournir un dispositif de moule pour machine de rotomoulage, et une machine de rotomoulage comprenant un ou plusieurs de ces dispositifs, qui ne présente pas les inconvénients, défauts, limitations et désavantages des dispositifs de moule et machines de rotomoulage de l'art antérieur.

Ce but, et d'autres encore, sont atteints, conformément à l'invention, par un dispositif de moule pour une machine de rotomoulage de pièce, destiné à être monté dans ladite machine de manière à être en rotation simultanément autour de deux axes, de préférence perpendiculaires, caractérisé en ce qu'il comprend :
- deux demi-cuves supérieure (1), respectivement inférieure, chacune de ces demi-cuves étant définie par une ou plusieurs paroi(s) (2, 3), les bords inférieur (4), respectivement supérieur, intérieurs de chacune de ces demi-cuves recevant de manière amovible une plaque porte-empreinte(s) (5) sur lesquelles sont fixées de manière amovible une ou plusieurs empreinte(s) supérieure(s) (8), respectivement inférieure(s), la face interne (10) de la ou des empreinte(s) supérieure (8) et inférieure formant un ou plusieurs moule(s) (11) ayant une forme correspondant à celle de la ou des pièce(s) à mouler, et la face externe (12) de la ou des empreinte(s) supérieure(s) (8) et de la ou des empreinte(s) inférieure(s) formant avec la ou les paroi(s) (2, 3) de la demi-cuve supérieure (1), respectivement inférieure, des chambres fermées supérieure (13), respectivement inférieure ;
- des premiers moyens (14, 15, 16) pour envoyer à l'intérieur des chambres un courant d'un fluide de chauffage pour chauffer les empreintes (8), et pour contrôler le courant du fluide de chauffage ;
- des deuxièmes moyens (17, 18, 19, 20) distincts des premiers moyens (14, 15, 16), pour envoyer à l'intérieur des chambres un courant d'un fluide de refroidissement pour refroidir les empreintes, éventuellement pour pulvériser le fluide de refroidissement sur les empreintes (8), et pour contrôler le courant du fluide de refroidissement;
- des troisièmes moyens (21, 22, 23) distincts des premiers moyens (14, 15, 16) et des deuxièmes moyens (17, 18, 19, 20), pour évacuer les fluides de chauffage et de refroidissement depuis les chambres.

Les fluides de chauffage et de refroidissement peuvent être choisis parmi les fluides liquides et les fluides gazeux.

Le fluide de chauffage peut être choisi parmi la vapeur d'eau (chaude), l'eau chaude à savoir à une température généralement de 40 à 100°C et l'huile.

Le fluide de refroidissement peut être choisi parmi l'eau froide à savoir à une température généralement de 2 à 30°C et l'huile.

Lorsque le fluide de chauffage est de la vapeur d'eau ou de l'eau chaude, le fluide de refroidissement est de l'eau froide.

Lorsque le fluide de chauffage est de l'huile, le fluide de refroidissement est également de l'huile.

De préférence, le fluide de chauffage est de la vapeur d'eau et le fluide de refroidissement est de l'eau froide.

Avantageusement, notamment lorsque le fluide de refroidissement est un liquide tel que de l'eau froide, on prévoit des moyens pour pulvériser ledit fluide de refroidissement tel que l'eau froide sur les empreintes.

Lorsque le fluide de chauffage est de la vapeur d'eau, il est généralement évacué sous la forme de vapeur condensée depuis les chambres.

Généralement chacune des demi-cuves est définie par des parois latérales et par une paroi supérieure, respectivement inférieure, raccordées auxdites parois latérales.

Le dispositif selon l'invention se distingue fondamentalement des dispositifs de l'art antérieur en ce que le moule est chauffé ou refroidi d'une manière totalement indépendante de celui-ci en envoyant un fluide de chauffage tel que de la vapeur d'eau ou un fluide de refroidissement tel que de l'eau froide à l'intérieur de chambres qui sont indépendantes des parois définissant le moule, et ne sont pas intégrées dans les parois du moule.

En outre, les moyens pour envoyer à l'intérieur des chambres un courant de fluide de chauffage tel que la vapeur d'eau pour chauffer les empreintes et pour contrôler, notamment interrompre, le courant de fluide de chauffage tel que la vapeur d'eau ; de même que les moyens pour envoyer un courant de fluide de refroidissement tel que l'eau froide à l'intérieur des chambres pour refroidir les empreintes, éventuellement pour pulvériser le fluide de refroidissement tel que l'eau froide sur les empreintes, et pour contrôler, notamment interrompre, le courant de fluide de refroidissement tel que l'eau froide; et enfin les moyens pour évacuer les fluides tels que l'eau et la vapeur condensée depuis les chambres sont totalement indépendants, différenciés des moules et de leurs parois.

On peut dire que le concept inventif principal sur lequel est basé le dispositif selon l'invention est le fait que l'on chauffe et refroidit les « parties moulantes » du dispositif par un fluide de chauffage tel que de la vapeur d'eau et par un fluide de refroidissement par exemple par une pulvérisation d'eau froide, la distribution, alimentation en fluide de refroidissement tel que de l'eau et en fluide de chauffage tel que de la vapeur étant totalement indépendante du ou des moule(s).

On peut aussi dire que selon l'invention le dispositif comprend deux chambres avec deux demi-cuves au lieu de deux demi-moules comme dans l'art antérieur.

La nécessité, pour certaines pièces, de réaliser des moules en plus de deux parties est alors facilitée par la possibilité d'ajouter une ou plusieurs chambre(s) intermédiaire(s) positionnée(s) entre les deux chambres principales.

Au contraire de certains des dispositifs de l'art antérieur cités plus haut, le dispositif de moule selon l'invention n'est pas équipé de serpentins ni de réseaux usinés pour son chauffage et son refroidissement, il est donc plus simple et plus économique à réaliser et à mettre en oeuvre et aussi plus fiable.

Le chauffage des moules effectué selon le dispositif de l'invention par l'intermédiaire d'un fluide de chauffage, par exemple de vapeur, envoyé dans les chambres définies plus haut est extrêmement efficace et extrêmement rapide par rapport à un chauffage réalisé par l'intermédiaire d'une chemise ou de serpentins.

De même le refroidissement des moules effectué selon le dispositif de l'invention, et notamment par l'intermédiaire d'eau froide pulvérisée directement sur la ou les empreinte(s), c'est-à-dire directement sur les parois formant le moule est extrêmement efficace et extrêmement rapide par rapport à un refroidissement réalisé par l'intermédiaire d'une chemise ou de serpentins ou par brumisation dans une enceinte ouverte.

On notera également que les fluides de chauffage et de refroidissement tels que l'eau et la vapeur, bien qu'ils soient en contact direct avec la paroi des moules, sont confinées dans des chambres, enceintes fermées, qui sont isolées de l'atmosphère environnante. En conséquence, l'ensemble de l'installation de rotomoulage ne se trouve pas en permanence par exemple dans une atmosphère humide comme c'est le cas dans les installations de rotomoulage du type à carrousel. On évite ainsi les réactions intempestives entre l'eau et des réactifs tels que les isocyanates mis en oeuvre par exemple lors de la préparation de pièces en polyuréthane.

En outre, le moule pour une pièce donnée se réduisant à la plaque porte-empreinte équipée de sa ou de ses empreinte(s), toute modification de la forme du moule occasionnée par exemple par un changement de fabrication ou par une modification de la forme de la pièce, peut se faire facilement, rapidement et de manière peu onéreuse, ce qui induit un gain de productivité.

Le fait que la partie propre à une pièce donnée se limite à l'empreinte ou aux empreintes fixées sur les plaques porte-empreinte inférieure (de la demi-cuve inférieure « en bas ») et supérieure (de la demi-cuve supérieure « en haut ») permet de réaliser une importante économie sur le coût des moules.

Cette structure particulière, simplifiée des moules du dispositif selon l'invention est beaucoup moins massive que celle des moules de l'art antérieur par exemple à double enveloppe ou à serpentins et permet d'améliorer encore plus (au-delà des améliorations dues à la manière particulière dont sont amenés et distribués les fluides d'échange de chaleur) les échanges thermiques car elle présente une très faible inertie.

Cette structure permet précisément d'utiliser en tant que fluides caloporteurs la vapeur d'eau et l'eau ce qui assure une différence de température importante et minimise les coûts car ce sont des fluides facilement disponibles et faciles à générer et à gérer.

En outre les plages de températures que l'on peut obtenir avec la vapeur d'eau et de l'eau froide conviennent particulièrement bien à la préparation de pièces en polyuréthanne car elles assurent un chauffage rapide pour activer la polymérisation et un refroidissement également rapide pour passer sous la température de transition vitreuse du polyuréthane par exemple en dessous de 50 °C, température à laquelle on peut sortir la pièce du moule.

En conséquence les courbes de chauffage et de refroidissement sont brutales ce qui permet de réduire les temps de cycle.

La structure spécifique du dispositif selon l'invention a pour conséquence que la température des empreintes est plus homogène ce qui réduit les risques de défauts sur la pièce moulée.

En outre, dans le dispositif selon l'invention, les premiers moyens (14, 15, 16) pour envoyer à l'intérieur des chambres un courant d'un fluide de chauffage pour chauffer les empreintes (8), et pour contrôler le courant du fluide de chauffage sont différents, distincts, séparés des deuxièmes moyens (17, 18, 19, 20) pour envoyer à l'intérieur des chambres un courant d'un fluide de refroidissement pour refroidir les empreintes, éventuellement pour pulvériser le fluide de refroidissement sur les empreintes (8), et pour contrôler le courant du fluide de refroidissement.

De plus, ces premiers et deuxièmes moyens sont également différents, distincts, séparés, des troisièmes moyens (21, 22, 23) pour évacuer les fluides de chauffage et de refroidissement depuis les chambres.

Plus simplement, dans le dispositif selon l'invention, les moyens de chauffage d'une part, et de refroidissement d'autre part, sont différents, distincts, séparés, alors que dans les dispositifs du document [1] et du document [2], ce sont les mêmes moyens qui jouent le rôle à la fois de moyens de chauffage et de refroidissement.

En d'autres termes, le dispositif selon l'invention se distingue fondamentalement des dispositifs de l'art antérieur tels que ceux des documents [1] et [2] par le fait que les fluides « chaud » et « froid » sont amenés séparément au moyen de canalisations distinctes directement dans les chambres. Ces fluides sont ensuite évacués des chambres par les troisièmes moyens d'évacuation, qui sont aussi distincts des premiers moyens et des deuxièmes moyens.

On peut dire que le dispositif selon l'invention comporte « trois tuyaux » au lieu d'un seul dans le cas notamment des dispositifs des documents [1] et [2].

Aussi bien dans le document [1] que dans le document [2], le fluide chaud et le fluide froid empruntent le même cheminement, le même circuit. De ce fait un temps considérable est perdu pour évacuer le fluide chaud, qui est chassé par le fluide froid.

Le dispositif selon l'invention, grâce à des circuits de fluide froid et de fluide chaud séparés, distincts, différents, permet de répondre à un besoin de cycles de chauffe et de refroidissement très rapides qui n'était pas satisfait par les dispositifs des documents [1] et [2]. Le dispositif selon l'invention, au contraire des dispositifs des documents [1] et [2], est parfaitement adapté à des durées de cycle courtes, par exemple d'une durée voisine de 5 minutes qui sont généralement mises en oeuvre avec les polymères thermodurcissables.

Le dispositif selon l'invention répond donc à l'ensemble des besoins énumérés plus haut, ne présente pas les inconvénients, défauts, limitations et désavantages des dispositifs de l'art antérieur et apporte une solution aux problèmes posés par les dispositifs de l'art antérieur.

Le dispositif selon l'invention est de préférence destiné à être fixé sur un cadre d'une machine de rotomoulage comprenant deux cadres tournant simultanément autour de deux axes, de préférence perpendiculaires.

Généralement, une des demi-cuves avec le cadre, plaque porte-empreinte, et la ou les empreinte(s) qui y sont fixées est fixe, tandis que l'autre des demi-cuves est mobile généralement en translation par rapport à la première demi-cuve.

Le dispositif selon l'invention peut comprendre des moyens pour établir une surpression dans les chambres lors du chauffage, par exemple avec de la vapeur, ce qui permet d'accroître encore l'efficacité et la rapidité du chauffage.

Le dispositif selon l'invention peut comprendre, en outre, des moyens pour établir un vide partiel dans les chambres lors du refroidissement, par exemple lors de la pulvérisation d'eau froide sur les empreintes, ce qui permet d'accroître encore l'efficacité et la rapidité du refroidissement.

Par vide partiel on entend généralement que la pression à l'intérieur des chambres est inférieure à la pression ambiante.

Le dispositif selon l'invention peut comprendre, en outre, des moyens pour injecter (lors du refroidissement) un gaz tel que de l'air, froid, directement à l'intérieur des moules, ce qui permet d'accélérer encore le refroidissement de la matière.

Le dispositif de moule selon l'invention peut ne comprendre qu'une seule empreinte supérieure et qu'une seule empreinte inférieure, mais le dispositif selon l'invention peut comprendre plusieurs empreintes supérieures identiques ou différentes, et plusieurs empreintes inférieures identiques ou différentes.

Lorsque le dispositif comprend plusieurs empreintes, ces empreintes peuvent être différentes par leur forme et/ou leur taille et/ou le matériau les constituant.

C'est là aussi un des avantages du dispositif selon l'invention que de permettre la fabrication simultanée de plusieurs pièces différentes avec un seul et même dispositif de moule alors que dans l'art antérieur il est nécessaire pour cela d'avoir recours à plusieurs moules placés chacun sur une machine différente, chacun de ces moules devant de plus être muni par exemple d'un système de chauffage et de refroidissement spécialement conçu.

Généralement, la ou les empreinte(s) supérieure(s) d'une part et la ou les empreinte(s) inférieure(s) d'autre part sont symétriques deux à deux.

Les moyens pour envoyer à l'intérieur des chambres un courant de fluide de chauffage, par exemple de vapeur d'eau, pour chauffer la ou les empreinte(s), et pour contrôler, notamment interrompre, le courant de fluide de chauffage, par exemple de vapeur d'eau, comprennent généralement une ou plusieurs canalisation(s) d'alimentation en fluide de chauffage, par exemple en vapeur d'eau, pourvue(s) de vannes, la ou lesdites canalisation(s) traversant la paroi d'au moins une des chambres, et alimentant une ou plusieurs rampe(s) de distribution de fluide de chauffage, par exemple de vapeur d'eau, disposées dans au moins une des chambres.

Les moyens pour envoyer un courant de fluide de refroidissement, par exemple d'eau froide, à l'intérieur des chambres pour refroidir la ou les empreinte(s), éventuellement pour pulvériser le fluide de refroidissement, par exemple l'eau froide, sur la ou les empreinte(s), et pour contrôler, de préférence interrompre, le courant de fluide de refroidissement par exemple d'eau froide, comprennent généralement une ou plusieurs canalisation(s) d'alimentation en fluide de refroidissement, par exemple en eau froide, pourvues de vannes, lesdites canalisations traversant la paroi d'au moins une des chambres, et alimentant une ou plusieurs rampes de distribution de fluide de refroidissement, par exemple d'eau froide, disposées dans au moins une des chambres et pourvue(s) de préférence de buses de pulvérisation.

Les buses de pulvérisation sont prévues notamment dans le cas où le fluide de refroidissement est un liquide, en particulier de l'eau froide.

Par eau « froide » au sens de l'invention on entend généralement que cette eau a une température inférieure de 10 à 100°C à la température de la paroi des empreintes. Par exemple l'eau froide aura une température de 2 à 30°C.

Par « eau chaude » au sens de l'invention, on entend généralement que cette eau a une température supérieure de 5 à 80°C à la température de la paroi des empreintes, par exemple l'eau chaude aura une température de 40 à 100°C.

Les moyens pour évacuer les fluides, par exemple l'eau et la vapeur condensée, depuis les chambres comprennent généralement une ou plusieurs canalisation(s) de sortie disposées dans chaque chambre inférieure, chacune pourvue d'une vanne de sortie.

Avantageusement, la pièce moulée dans le dispositif de moule selon l'invention est une pièce en un polymère thermodurcissable tel que le polyuréthane.

En effet les durées de refroidissement et de chauffage extrêmement courtes rendues possibles avec le dispositif de moule selon l'invention et dues notamment à sa très faible inertie thermique sont particulièrement avantageuses dans le cas du rotomoulage du polyuréthane où l'on recherche précisément des durées de chauffage et de refroidissement très réduites.

En particulier, on peut grâce au dispositif de moule selon l'invention adapter simplement une machine de rotomoulage classique munie d'un moule classique pour le moulage de thermoplastiques tels que le polyéthylène au rotomoulage du polyuréthane.

Le dispositif de moule selon l'invention peut comprendre en outre un ou plusieurs cadre(s), par exemple de formes rectangulaires, fixés entre les demi-cuves inférieure et supérieure et recevant les porte-empreintes.

Ce ou ces cadre(s) supplémentaire(s) permettent d'approfondir les cuves et de fabriquer ainsi des pièces profondes.

L'invention a également trait à une machine de rotomoulage comprenant au moins un dispositif de moule tel que décrit ci-dessus.

L'invention concerne enfin un procédé pour mouler au moins une pièce, mettant en oeuvre ladite machine de rotomoulage, qui comprend au moins une étape de chauffage, et au moins une étape de refroidissement.

Avantageusement, la pièce moulée peut être une pièce en un polymère thermodurcissable tel que le polyuréthane.

Avantageusement, lors de l'étape de chauffage, on établit une surpression dans les chambres et on utilise un fluide de chauffage en phase vapeur tel que de la vapeur d'eau, et lors de l'étape de refroidissement, on établit un vide partiel dans les chambres.

De préférence, on utilise un fluide de refroidissement liquide lors de l'étape de refroidissement.

La combinaison d'un fluide de chauffage en phase vapeur et sous pression, et d'un fluide de refroidissement liquide et sous vide partiel entraîne une accélération considérable des échanges thermiques et un gain de temps considérable.

L'invention va maintenant être décrite de manière plus détaillée dans la description qui suit donnée à titre illustratif et non limitatif, en référence aux dessins joints dans lesquels :
La figure 1 est une vue latérale en coupe d'une des deux demi-cuves du dispositif de moule selon l'invention ;
La figure 2 est une vue latérale en coupe d'une des deux demi-cuves du dispositif de moule selon l'invention, tel que représenté sur la figure 1, lors du chauffage des moules, empreintes, par un courant de vapeur d'eau ;
La figure 3 est une vue latérale en coupe d'une des deux demi-cuves du dispositif de moule selon l'invention, tel que représenté sur la figure 1, lors du refroidissement des moules, empreintes, par pulvérisation d'eau froide ;
La figure 4 est une vue latérale en coupe d'une des deux demi-cuves du dispositif de moule selon l'invention, tel que représenté sur la figure 1, lors de l'évacuation des fluides (par exemple eau et vapeur condensée).

Il est à noter que dans la description qui suit, on cite généralement l'eau froide comme fluide de refroidissement et la vapeur d'eau comme fluide de chauffage mais ces fluides ne sont donnés qu'à titre d'exemples et la description du dispositif s'applique aussi à tous les fluides de chauffage et de refroidissement moyennant éventuellement quelques adaptations à la portée de l'homme du métier.

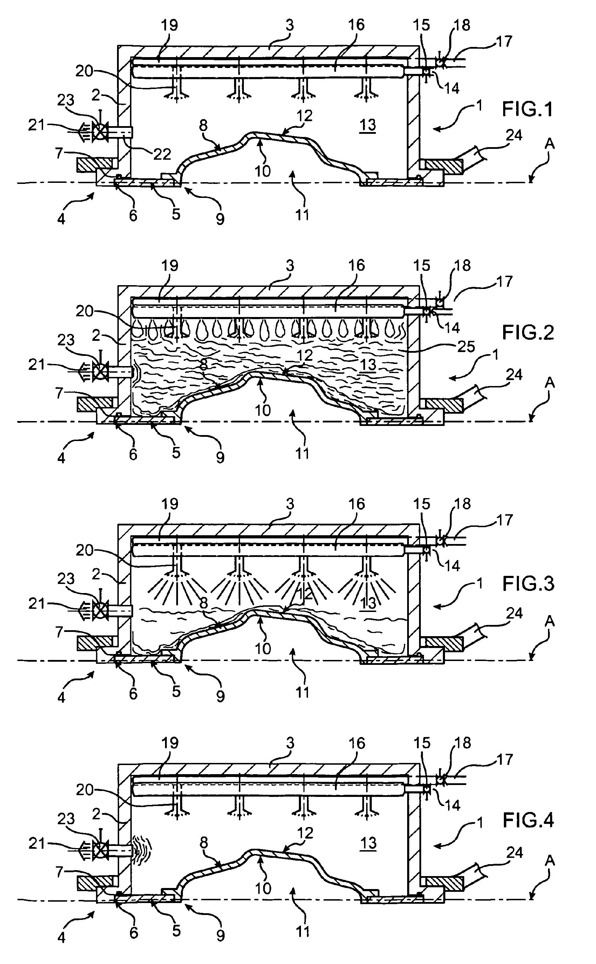

On voit sur la figure 1 l'une des deux demi-cuves (1) du dispositif selon l'invention. Le dispositif de moule selon l'invention étant généralement symétrique par rapport à un plan de joint (A) selon lequel se rejoignent les deux demi-cuves, la description qui est faite s'applique aussi à l'autre demi-cuve non représentée sur les figures. Les deux demi-cuves sont donc généralement identiques.

La demi-cuve (1) montrée sur la figure 1 peut être définie comme étant (à l'arrêt) la demi-cuve « supérieure » du dispositif. La description qui est faite pourra être facilement transposée à la demi-cuve « inférieure » du dispositif.

Le dispositif de moule selon l'invention est destiné à être disposé, monté dans une machine de rotomoulage de pièces.

Dans cette machine de rotomoulage, le dispositif de moule selon l'invention est monté de manière classique de façon à être en rotation autour de deux axes, de préférence perpendiculaires, orthogonaux, plus précisément le dispositif selon l'invention est destiné à être fixé sur un cadre d'une machine de rotomoulage comprenant deux cadres tournant simultanément autour de ceux axes, de préférence orthogonaux, perpendiculaires. Le dispositif selon l'invention est donc muni de tous les moyens appropriés permettant son montage dans une telle machine de rotomoulage.

La demi-cuve représentée sur la figure 1 comprend des parois latérales (2) et une paroi supérieure (3) et a sensiblement la forme d'un parallélépipède rectangle. Il est à noter que la forme de la demi-cuve (1) n'est en aucune manière limitée à la forme montrée sur les figures et que au contraire la demi-cuve (1) peut avoir une forme quelconque par exemple une forme hémisphérique ou une forme de cylindre vertical, de préférence à section circulaire, ou autre.

Dans le cas où la demi-cuve (1) est hémisphérique les parois supérieures et latérales (2,3) sont bien évidemment confondues et forment une seule et même paroi.

La demi-cuve peut être en tout matériau adéquate tel que l'acier, l'acier inoxydable, l'aluminium, ou les matériaux composites.

La demi-cuve est généralement potentiellement isolée thermiquement, par exemple avec des panneaux isolants.

Les bords inférieurs (4) des parois (2) de la demi-cuve reçoivent de manière amovible une plaque porte-empreinte (5). Une plaque est prévue pour chaque demi-cuve.

A cet effet les bords inférieurs (4) des parois (2) de la demi-cuve (1) sont usinés. Ainsi comme représenté sur la figure 1, elles peuvent se terminer par un épaulement (6) présentant une surface support inférieure dirigée vers le bas et sur laquelle vient s'appuyer le cadre, plaque porte-empreinte (5).

Entre ladite surface support, dirigée vers le bas et le cadre, plaque porte-empreinte (5) est généralement prévu un joint d'étanchéité (7).

Le cadre, plaque porte-empreinte (5) se présente généralement sous la forme d'un cadre plat de faible épaisseur.

L'extérieur de ce cadre, de cette plaque, ou plus exactement le bord extérieur, notamment supérieur de ce cadre, est usiné pour être reçu, de préférence fixé, dans l'épaulement (6) de la paroi (2) de la demi-cuve (1), et l'intérieur de ce cadre, ou plus exactement le bord intérieur, notamment supérieur de ce cadre, de cette plaque, est également usiné pour recevoir la ou les empreinte(s) (8).

Plus précisément la ou les empreinte(s) (8) qui sont par exemple des pièces de fonderie en aluminium peuvent comporter un usinage périphérique pour faire la jonction avec le porte-empreinte qui comporte une découpe correspondante.

Sur la figure 1 la demi-cuve (1) ayant une section rectangulaire, la plaque, le cadre (5) a aussi une section rectangulaire mais toute autre forme peut aussi convenir en fonction de la forme de la demi-cuve (1) et notamment de la section de celle-ci. Ainsi dans le cas d'une demi-cuve (1) cylindrique ou hémisphérique le cadre, la plaque porte-empreinte (5) aura généralement une forme circulaire.

Le cadre, plaque porte-empreinte (5) est réalisé en un matériau tel que généralement choisi parmi les mêmes matériaux que ceux constituant la demi-cuve.

Sur le cadre, plaque porte-empreinte (5) sont supportées, de préférence fixées, une ou plusieurs empreinte(s) (8) qui présentent des bords usinés (9) qui sont reçus sur le bord supérieur interne du cadre porte-empreinte (5).

La face interne (10) de la ou des empreintes (8) représentées sur la figure 1 qui sont les empreintes « supérieures » du dispositif de moule, forme avec la face interne de la ou des empreinte(s) « inférieures » un ou plusieurs moule(s) (11) ayant une forme correspondant à celle de la ou des pièce(s) à mouler.

La face externe (12) de la ou des empreintes (8) forme avec les parois (2,3) (la paroi dans le cas d'une cuve hémisphérique) de la demi-cuve « supérieure » (1), et le cadre porte-empreinte (5) une chambre fermée (13).

En d'autres termes les demi-cuves et les plaques porte-empreintes (5) forment des chambres dans lesquelles l'extérieur des empreintes (8) pénètre.

Une ou plusieurs empreinte(s) (8) peuvent être placées, fixées, de manière amovible, sur le cadre, plaque porte-empreinte (5). Lorsque le dispositif comprend plusieurs empreintes (8) celles-ci peuvent être identiques ou différentes.

Par empreintes différentes on entend que ces empreintes diffèrent par leur taille et/ou leur forme, et/ou le matériau qui les constitue.

Ainsi le cadre, plaque porte-empreinte peut supporter généralement de 1 à 8 empreintes sans que cela soit limitatif.

Il s'agit là d'un des avantages importants du dispositif selon l'invention que d'être un dispositif « multi empreintes » c'est à dire pouvant recevoir plusieurs empreintes (8).

La fixation du cadre, plaque porte-empreinte (5) sur la demi-cuve (1) ainsi que la fixation de l'empreinte ou des empreintes (8) sur le cadre, plaque porte-empreinte (5) sont généralement de nature amovible, généralement réalisées par des vis, et le montage et le démontage de ces éléments pour changer le type de pièce fabriquée ou pour modifier une partie de celle-ci sont faciles, rapides et n'entraînent aucun démontage aucune modification des moyens de chauffage et de refroidissement puisque ceux-ci sont totalement séparés, indépendants du moule.

La ou les empreinte(s) (8) peuvent être en un matériau choisi parmi l'aluminium et peuvent être facilement fabriquées en fonderie.

Du fait de la rapidité de changement des empreintes et porte-empreintes du dispositif selon l'invention, il est possible de réaliser avec celui-ci très rapidement de nombreux essais, c'est-à-dire de faire ce que l'on appelle couramment du « prototypage », en utilisant par exemple des empreintes et cadres porte-empreintes en composite.

On met ainsi à profit plutôt les possibilités de montage et démontage rapides du dispositif selon l'invention en faisant quelque peu abstraction des contraintes thermiques.

Le dispositif de moule selon l'invention peut comprendre en outre un ou plusieurs cadre(s) supplémentaires (non représentés), par exemple de forme rectangulaire, fixés entre la base des parois latérales, flancs (2) de la demi-cuve (1) supérieure représentée sur la figure 1 et la plaque porte-empreinte (5) et/ou entre le sommet des parois latérales, flancs de la demi-cuve inférieure et la plaque porte-empreinte (5).

Ces cadres supplémentaires sont également usinés de manière appropriée pour recevoir les porte-empreintes (5).

Ce ou ces cadre (s) supplémentaire (s) aussi appelés « réhausses » permettent d'approfondir les cuves et de fabriquer ainsi des pièces profondes telles que des réservoirs.

Ce ou ces cadre (s) supplémentaire (s) sont également généralement isolés thermiquement.

Aussi bien les empreintes que les porte-empreintes, que les cadres supplémentaires peuvent être fabriqués facilement à faible coût par des procédés éprouvés à partir de matériaux également de coût peu élevé et le montage, la réparation et le changement de ces diverses pièces est facile et rapide au contraire des dispositifs à chemise, serpentins de l'art antérieur.

Comme on l'a déjà indiqué plus haut, généralement, une des demi-cuves avec le cadre, plaque porte-empreinte, et la ou les empreinte(s) qui y sont fixées est fixe, tandis que l'autre des demi-cuves est mobile généralement en translation par rapport à la première demi-cuve.

La demi-cuve fixe est généralement fixée à l'un des cotés de l'un des cadres tournant de la machine de rotomoulage (à ne pas confondre avec le cadre, plaque porte-empreinte), tandis que la demi-cuve mobile est fixée au côté opposé de ce même cadre par l'intermédiaire de moyens permettant de la déplacer de préférence en translation par rapport à la demi-cuve fixe. Il est ainsi possible d'ouvrir et de fermer le ou les moule(s) formé(s) par les empreintes lors des opérations de remplissage du ou des moule(s), et de démoulage de la ou des pièces moulées fabriquées dans le ou les moule(s).

Les moyens pour déplacer la demi-cuve mobile peuvent être notamment constitués par des vérins hydrauliques ou pneumatiques.

La demi-cuve mobile est généralement la demi-cuve supérieure (à l'arrêt) c'est à dire la demi-cuve (1) qui est représentée sur la figure 1.

Le dispositif selon l'invention, tel que représenté sur la figure 1, comporte des moyens pour envoyer à l'intérieur des chambres un courant de vapeur d'eau pour chauffer les empreintes et pour contrôler, par exemple interrompre, ce courant de vapeur d'eau.

Sur la figure 1 ces moyens comprennent une canalisation (14) en provenance d'un générateur de vapeur d'eau (non représenté). La canalisation (14) est pourvue d'une vanne (15) placée avant la demi-cuve (1), permettant de contrôler, c'est-à-dire notamment d'interrompre, reprendre, et régler l'alimentation en vapeur d'eau.

Sur la figure 1 une seule canalisation d'alimentation en vapeur d'eau (14) a été représentée, mais il est bien évident que plusieurs canalisations d'alimentation peuvent être prévues notamment dans le but d'optimiser les débits et l'homogénéité des températures.

La canalisation d'alimentation en vapeur d'eau (14) traverse la paroi (2) de la demi-cuve (1) et alimente une ou plusieurs rampes de distribution (16) de vapeur d'eau disposées dans la chambre (13). Cette ou ces rampe(s) (16) sont percées d'orifices, de préférence régulièrement espacés qui permettent d'envoyer à l'intérieur de la chambre (13) un courant de vapeur qui chauffe les empreintes (8) de façon extrêmement homogène et rapide.

Les rampes (16) sont généralement placées au voisinage de la paroi supérieure (3) de la demi-cuve (1) représentée sur la figure 1.

Le dispositif peut comprendre, en outre, des moyens (non représentés) pour établir une surpression dans les chambres lors du chauffage, par exemple avec de la vapeur.

De tels moyens peuvent être facilement choisis par l'homme du métier.

Le dispositif peut comprendre, en outre, des moyens (non représentés) pour injecter, lors du refroidissement un gaz tel que de l'air, froid, directement à l'intérieur des moules (11), ce qui permet d'accélérer encore le refroidissement de la matière.

De tels moyens peuvent être facilement choisis par l'homme du métier.

Les moyens pour envoyer un courant d'eau froide à l'intérieur des chambres, pulvériser l'eau froide sur les empreintes et contrôler c'est-à-dire notamment, interrompre ce courant d'eau froide comprennent sur la figure 1 une canalisation (17) en provenance d'un réservoir d'eau froide (non représenté). La canalisation (17) est pourvue d'une vanne (18) placée avant la demi-cuve (1) permettant de contrôler, c'est-à-dire notamment d'interrompre, reprendre, et régler l'alimentation en eau froide.

Sur la figure 1 une seule canalisation d'alimentation en eau froide (17) a été représentée, mais il est bien évident que plusieurs canalisations d'alimentation peuvent être prévues.

La canalisation d'alimentation en eau froide (17) traverse la paroi (2) de la demi-cuve (1) et alimente une ou plusieurs rampe(s) de distribution d'eau froide (19) disposées dans la chambre (13). Cette ou ces rampe (s) (19) sont munies de buses de pulvérisation (20), de préférence régulièrement espacées, qui permettent de pulvériser l'eau froide sur les empreintes (8) en assurant ainsi leur refroidissement de façon extrêmement homogène et extrêmement rapide.

L'eau est donc pulvérisée dans une chambre fermée et l'atmosphère autour du dispositif n'est donc pas humide, car l'eau est confinée maintenue dans une enceinte close et dans des canalisations formant de préférence un circuit fermé.

Le dispositif peut également comprendre des moyens pour établir un vide partiel à l'intérieur des chambres fermées lors de la pulvérisation d'eau froide.

Ces moyens (non représentés), peuvent comprendre une vanne de sortie reliée par l'intermédiaire d'un tuyau à un dispositif de mise sous vide comprenant par exemple une pompe à anneau liquide et un accumulateur.

Sur la figure 1 le dispositif comprend des moyens pour évacuer l'eau et la vapeur condensée et plus généralement tous les fluides se trouvant dans la chambre.

Ces moyens se présentent sur la figure 1 sous la forme d'une canalisation de sortie (21) raccordée à un piquage (22) généralement placé dans la partie inférieure de la chambre (12) et munie d'une vanne d'évacuation, de sortie (23).

Selon l'invention l'eau et la vapeur sont de préférence récupérées, renvoyées, vers un réservoir tampon.

Ce réservoir alimente le circuit de fluide chaud tel que la vapeur ou l'eau chaude, et le circuit de fluide froid tel que l'eau froide. Et les fluides sont ensuite renvoyés dans le dispositif. Cela permet de limiter leur consommation et de confiner les fluides dans un circuit fermé évitant ainsi toute réaction notamment avec les précurseurs de polymères tels que le polyuréthane.

Le dispositif de moule selon l'invention représenté sur la figure 1 comprend en outre comme on l'a déjà indiqué plus haut, un certain nombre de moyens permettant son adaptation dans une machine de rotomoulage.

Ces moyens permettent de fixer, monter le dispositif de moule selon l'invention dans une machine de rotomoulage par exemple sur l'un des cadres (24) d'une machine de rotomoulage comprenant deux cadres tournant simultanément autour de deux axes, de préférence perpendiculaires, orthogonaux.

L'invention concerne une machine de rotomoulage comprenant au moins un dispositif de moulage selon l'invention, cette machine ne sera pas décrite de manière plus détaillée, en fait il peut s'agir d'une machine classique, traditionnelle, connue, dans laquelle le moule est remplacé par un dispositif de moule selon l'invention en procédant éventuellement aux quelques adaptations nécessaires pour recevoir le dispositif de moule selon l'invention.

En particulier, on peut grâce au dispositif de moule selon l'invention adapter simplement une machine de rotomoulage classique, munie d'un moule classique pour le moulage de thermoplastiques, tel que le polyéthylène au rotomoulage du polyuréthane, il suffit pour cela de remplacer le moule classique par un dispositif de moule selon l'invention

Il est en outre à noter que les fluides tels que vapeur d'eau, condensats évacués, transitent par des vannes tournantes (reliées par des canalisations flexibles aux vannes du dispositif de moule selon l'invention) au niveau des axes de rotation de la machine.

On va maintenant décrire le fonctionnement d'une machine de rotomoulage comprenant le dispositif de moule selon l'invention.

Tout d'abord on dispose sur les cadres (24) de la machine de « Rotomoulage » un dispositif de moule selon l'invention tel que décrit sur la figure 1 comprenant des demi-cuves (1) usinées recevant des plaques porte-empreintes (5).

Eventuellement selon la ou les pièce(s) à préparer les demi-cuves peuvent être approfondies en ajoutant des cadres par exemple rectangulaires usinés fixés sur les demi-cuves et permettant de recevoir les plaques porte-empreintes.

Les demi-cuves et les plaques porte-empreintes forment une chambre (13) dans laquelle l'extérieur (12) des empreintes pénètre.

La demi-cuve mobile (1) est écartée de la demi-cuve fixe ce qui permet d'ouvrir le ou les moule(s).

On remplit la demi-cuve fixe avec la matière destinée à former la ou les pièce(s) ou les précurseurs de cette matière ainsi dans le cas de pièces en polyuréthanne on introduit dans la demi-cuve les précurseurs polyols et isocyanates du polymère de polyuréthane.

On ferme le ou les moule(s) en rapprochant la demi-cuve mobile (1) de la demi-cuve fixe.

On met en rotation le dispositif de moule autour de ses deux axes, généralement orthogonaux.

On procède au chauffage du ou des moule(s) ou plus précisément de la ou des empreinte(s).

A cet effet un courant de vapeur d'eau produite par un générateur de vapeur d'eau est envoyé à l'intérieur des chambres par l'intermédiaire de la canalisation (14), de la vanne (15) qui est alors en position ouverte et des rampes (16) pourvues d'orifices. Les vannes (23) et (18) sont, quant à elles fermées.

La vapeur d'eau (25) chauffe les empreintes (7) de façon extrêmement homogène (voir Figure 2).

Ce chauffage est de plus extrêmement rapide.

Ensuite, a lieu une étape, phase pendant laquelle la température est maintenue constante afin, dans le cas de polymères thermoplastiques, de réaliser la fusion de la matière contenue dans les moules, ou bien, notamment dans le cas de la préparation de pièces en polyuréthanes, de réaliser la polymérisation des précurseurs. Pendant cette période de maintien en température la demi-cuve est rendue étanche par un jeu de vannes et le courant de vapeur est interrompu, ce qui signifie que les vannes (15), (16) et (23) sont fermées.

A la fin de la phase de fusion ou de polymérisation, on souhaite refroidir les empreintes (8) le plus rapidement possible.

Pour cette opération, on dispose en fond de cuve d'un réseau de tubulures, rampes (19) munies de buses de pulvérisation (20) dans lesquelles on envoie de l'eau froide par l'intermédiaire de la canalisation (17) et de la vanne (18) qui se trouve donc en position ouverte, l'eau pulvérisée en excès est évacuée par l'intermédiaire du piquage (22), de la vanne (23) en position ouverte et de la canalisation (21) (voir figure 3). Lors de cette étape la vanne (15) est fermée.

Pour accélérer les échanges thermiques, on peut selon l'invention jouer sur l'état des fluides, notamment du fluide de chauffage et/ou sur la pression régnant dans les chambres lors de l'étape de chauffage et/ou de refroidissement. Cette manière de mettre à profit les états des différents fluides et la surpression ou le vide partiel régnant dans les chambres n'est ni mentionnée ni suggérée dans les documents de l'art antérieur, tels que les documents [1] et [2], et est particulièrement avantageuse lorsque l'on travaille avec des matériaux thermodurcissables.

Il est ainsi particulièrement avantageux de mettre les chambres en surpression lors de l'étape de chauffage notamment lorsque le fluide de chauffage est à l'état de vapeur, puis de mettre les chambres en vide partiel lors de l'étape de refroidissement qui est généralement réalisée avec un fluide tel que de l'eau froide, à l'état liquide.

La pression en phase vapeur augmente la température lors du chauffage et le vide lors du refroidissement abaisse la température (conformément au diagramme de Carnot).

Ensuite, on évacue totalement tous les fluides par le piquage (22), la vanne de sortie (23), et la canalisation (21), les vannes (15) et (18) étant fermées (voir figure 4).

On peut ensuite ouvrir le ou les moule(s) refroidis en écartant la demi-cuve mobile de la demi-cuve fixe, et retirer la ou les pièce(s) solidifiée(s) des moules.

## Revendications

1. Dispositif de moule pour machine de rotomoulage de pièce, destiné à être monté dans ladite machine de manière à être en rotation simultanément autour de deux axes, de préférence perpendiculaires, comprenant :
- deux demi-cuves supérieure (1), respectivement inférieure, chacune de ces demi-cuves étant définie par une ou plusieurs paroi(s) (2, 3), les bords inférieur (4), respectivement supérieur, intérieurs de chacune de ces demi-cuves recevant de manière amovible une plaque porte-empreinte(s) (5) sur lesquelles sont fixées de manière amovible une ou plusieurs empreinte(s) supérieure(s) (8), respectivement inférieure(s), la face interne (10) de la ou des empreinte(s) supérieure (8) et inférieure formant un ou plusieurs moule(s) (11) ayant une forme correspondant à celle de la ou des pièce(s) à mouler, et la face externe (12) de la ou des empreinte(s) supérieure(s) (8) et de la ou des empreinte(s) inférieures formant avec la ou les paroi(s) (2,3) de la demi-cuve supérieure (1) , respectivement inférieure, des chambres fermées supérieure (13), respectivement inférieure ;
**caractérisé en ce qu'**il comprend :
- des premiers moyens (14, 15, 16) pour envoyer à l'intérieur des chambres un courant d'un fluide de chauffage pour chauffer les empreintes (8), et pour contrôler le courant du fluide de chauffage ;
- des deuxièmes moyens (17, 18, 19, 20), distincts des premiers moyens (14, 15, 16), pour envoyer à l'intérieur des chambres un courant d'un fluide de refroidissement pour refroidir les empreintes, éventuellement pour pulvériser le fluide de refroidissement sur les empreintes (8), et pour contrôler le courant du fluide de refroidissement;
- des troisièmes moyens (21, 22, 23), distincts des premiers moyens (14, 15, 16) et des deuxièmes moyens (17, 18, 19, 20), pour évacuer les fluides de chauffage et de refroidissement depuis les chambres.

2. Dispositif selon la revendication 1 dans lequel les fluides de chauffage et de refroidissement sont choisis parmi les fluides liquides et les fluides gazeux.

3. Dispositif selon la revendication 1 ou 2 dans lequel le fluide de chauffage est choisi parmi la vapeur d'eau, l'eau chaude et l'huile.

4. Dispositif selon l'une quelconque des revendications précédentes dans lequel le fluide de refroidissement est choisi parmi l'eau froide et l'huile.

5. Dispositif selon les revendications 3 et 4 dans lequel le fluide de chauffage et le fluide de refroidissement sont de l'huile.

6. Dispositif selon l'une des revendications 3 et 4 dans lequel le fluide de chauffage est de la vapeur d'eau ou de l'eau chaude, et le fluide de refroidissement est de l'eau froide.

7. Dispositif selon l'une quelconque des revendications précédentes dans lequel le fluide de refroidissement est un liquide tel que de l'eau froide, et des moyens pour pulvériser ledit fluide de refroidissement sur les empreintes sont prévus.

8. Dispositif selon la revendication 1 destiné à être fixé sur un cadre (24) d'une machine de rotomoulage comprenant deux cadres tournant simultanément autour de deux axes, de préférence perpendiculaires.

9. Dispositif selon la revendication 1 comprenant, en outre, des moyens pour établir un vide partiel dans les chambres (13) lors du refroidissement, par exemple lors de la pulvérisation d'eau froide sur les empreintes.

10. Dispositif selon l'une quelconque des revendications précédentes comprenant, en outre, des moyens pour établir une surpression dans les chambres (13) lors du chauffage par exemple avec de la vapeur.

11. Dispositif selon l'une quelconque des revendications précédentes comprenant, en outre, des moyens pour injecter, lors du refroidissement, un gaz tel que de l'air, froid directement à l'intérieur des moules (11).

12. Dispositif selon l'une quelconque des revendications précédentes comprenant plusieurs empreintes supérieures identiques ou différentes, et plusieurs empreintes inférieures identiques ou différentes.

13. Dispositif selon la revendication 10 dans lequel les empreintes sont différentes par leur forme et/ou leur taille et/ou le matériau les constituant.

14. Dispositif selon l'une quelconque des revendications précédentes dans lequel la ou les empreinte(s) supérieure(s) d'une part et la ou les empreinte(s) inférieure(s) d'autre part sont symétriques deux à deux.

15. Dispositif selon l'une quelconque des revendications précédentes dans lequel les moyens pour envoyer à l'intérieur des chambres un courant de fluide de chauffage, par exemple de vapeur d'eau, pour chauffer la ou les empreinte(s), et pour contrôler, notamment interrompre, le courant de fluide de chauffage, par exemple de vapeur d'eau, comprennent une ou plusieurs canalisation(s) d'alimentation en fluide de chauffage, par exemple en vapeur d'eau (14), pourvues de vannes (15), la ou lesdites canalisation(s) (14) traversant la paroi (2) d'au moins une des chambres (13), et alimentant une ou plusieurs rampe(s) de distribution de fluide de chauffage, par exemple de vapeur d'eau (16), disposée(s) dans au moins une des chambres (13).

16. Dispositif selon l'une quelconque des revendications précédentes dans lequel les moyens pour envoyer un courant de fluide de refroidissement, par exemple d'eau froide, à l'intérieur des chambres pour refroidir la ou les empreinte(s), et éventuellement pour pulvériser le fluide de refroidissement, par exemple l'eau froide, sur la ou les empreinte(s), et pour contrôler, de préférence interrompre, le courant de fluide de refroidissement, par exemple d'eau froide, comprennent une ou plusieurs canalisation(s) d'alimentation en fluide de refroidissement, par exemple en eau froide (17), pourvues de vannes (18), lesdites canalisations (17) traversant la paroi (2) d'au moins une des chambres (13), et alimentant une ou plusieurs rampe(s) de distribution de fluide de refroidissement, par exemple d'eau froide (19), disposée(s) dans au moins une des chambres (13) et pourvue(s) de préférence de buses de pulvérisation (20).

17. Dispositif selon l'une quelconque des revendications précédentes dans lequel les moyens pour évacuer les fluides, par exemple l'eau et la vapeur condensée, depuis les chambres comprennent une ou plusieurs canalisation(s) de sortie (21) chacune pourvue d'une vanne de sortie (23).

18. Dispositif selon l'une quelconque des revendications précédentes comprenant en outre un ou plusieurs cadre(s) par exemple de forme rectangulaire fixés entre les demi-cuves et recevant les porte-empreintes.

19. Machine de rotomoulage comprenant au moins un dispositif de moule selon l'une quelconque des revendications précédentes.

20. Procédé pour mouler au moins une pièce, mettant en oeuvre la machine de rotomoulage selon la revendication 19, comprenant au moins une étape de chauffage et au moins une étape de refroidissement.

21. Procédé selon la revendication 20 dans lequel la pièce moulée est une pièce en polymère thermodurcissable tel que le polyuréthane.

22. Procédé selon l'une quelconque des revendications 20 et 21 dans lequel lors de l'étape de chauffage, on établit une surpression dans les chambres et on utilise un fluide de chauffage en phase vapeur tel que de la vapeur d'eau, et lors de l'étape de refroidissement, on établit un vide partiel dans les chambres.

## Claims

1. Mould device for a machine for the rotational moulding of a part, for being mounted in said machine in order to be rotated simultaneously about two axes, preferably perpendicular axes, comprising:
- two upper (1) and lower half vessels, respectively each of these half vessels being defined by one or more wall(s) (2, 3), the inside lower (4) and upper edges respectively of each of these half vessels removably receiving a cavity carrier plate (5) to which are removably attached one or more upper (8) and lower cavity(ies), respectively, the inner face (10) of the upper (8) and lower cavity(ies) forming one or more mould(s) (11) having a shape matching the shape of the part(s) to be moulded, and the outer face (12) of the upper cavity(ies) (8) and lower cavity(ies) forming with the wall(s) (2, 3) of the upper and lower half vessel respectively, upper (13) and lower closed chambers respectively; **characterised in that** it comprises:
- first means (14, 15, 16) for feeding inside the chambers a stream of a heating fluid to heat the cavities (8), and for controlling the stream of a heating fluid;
- second means (17, 18, 19, 20), different from the first means (14, 15, 16) for feeding inside the chambers a stream of a cooling fluid to cool the cavities, possibly for spraying the cooling fluid onto the cavities (8), and for controlling the stream of a cooling fluid;
- third means (21, 22, 23), different from the first means (14, 15, 16) and from the second means (17, 18, 19, 20), for discharging the heating and cooling fluids from the chambers.

2. Device according to claim 1, wherein the heating and cooling fluids are selected from liquid fluids and gaseous fluids.

3. Device according to claim 1 or 2, wherein the heating fluid is selected from steam, hot water and oil.

4. Device according to any one of the preceding claims, wherein the cooling fluid is selected from cold water and oil.

5. Device according to claims 3 and 4, wherein the heating fluid and the cooling fluid are oil.

6. Device according to any one of claims 3 and 4, wherein the heating fluid is steam or hot water, and the cooling fluid is cold water.

7. Device according to any one of the preceding claims, wherein the cooling fluid is a liquid such as cold water, and means for spraying said cooling fluid onto the cavities are provided.

8. Device according to claim 1, for being attached to a frame (24) of a rotomoulding machine comprising two frames simultaneously rotating about two axes, preferably two perpendicular axes.

9. Device according to claim 1, further comprising means for creating a partial vacuum in the chambers (13) upon cooling, for example upon spraying cold water onto the cavities.

10. Device according to any one of the preceding claims, further comprising means for creating an excess pressure in the chambers (13) upon heating for example with steam.

11. Device according to any one of the preceding claims, further comprising means for injecting, upon cooling, a gas such as cold air, directly inside the moulds (11).

12. Device according to any one of the preceding claims, comprising several identical or different upper cavities, and several identical or different lower cavities.

13. Device according to claim 10, wherein the cavities differ in their shape and/or their size and/or the material they are made of.

14. Device according to any one of the preceding claims, wherein the one or more upper cavity(ies) on the one hand and the one or more lower cavity (ies) on the other hand are symmetrically paired.

15. Device according to any one of the preceding claims, wherein the means for feeding inside the chambers a stream of a heating fluid, for example of steam, to heat the one or more cavity(ies), and for controlling, in particular for discontinuing, the stream of a heating fluid, for example of steam, comprise one or more heating fluid, for example steam (14), supplying pipe(s), provided with valves (15), said pipe(s) (14) passing through the wall (2) of at least one of the chambers (13), and supplying one or more heating fluid, for example steam (16), manifold(s), provided in at least one of the chambers (13).

16. Device according to any one of the preceding claims, wherein the means for feeding a stream of a cooling fluid, for example of cold water, inside the chambers to cool the cavity(ies), and possibly for spraying a cooling fluid, for example of cold water, onto the one or more cavity(ies), and for controlling, preferably for discontinuing, the stream of a cooling fluid, for example of cold water, comprise one or more cooling fluid, for example of cold water (17), supplying pipe(s), provided with valves (18), said pipe(s) (17) passing through the wall (2) of at least one of the chambers (13), and supplying one or more cooling fluid, for example cold water (19), manifold(s), provided in at least one of the chambers (13) and preferably provided with spray nozzles (20).

17. Device according to any one of the preceding claims, wherein the means for discharging fluids, for example water and condensed steam, from the chambers comprise one or more outer pipe(s) (21) each provided with an outlet valve (23).

18. Device according to any one of the preceding claims, further comprising one or more frame(s), for example of the rectangular shape, attached between the half vessels and receiving the cavity carriers.

19. Rotomoulding machine comprising at least one mould device according to any one of the preceding claims.

20. Method for moulding at least one part, implementing the rotomoulding machine according to claim 19, comprising at least one heating step and at least one cooling step.

21. Method according to claim 20, wherein the moulded part is a part made of a thermosetting polymer such as polyurethane.

22. Method according to any one of claims 20 and 21, wherein during the heating step, an excess pressure is created in the chambers and a vapour phase heating fluid such as steam is used, and during the cooling step, a partial vacuum is created in the chambers.

## Patentansprüche

1. Formvorrichtung für eine Rotationsformmaschine eines Teils, die so in die genannte Maschine montiert werden soll, dass sie simultan um zwei vorzugsweise zueinander senkrechte Achsen rotiert, umfassend :
- zwei Halbbehälter, oben (1) respektive unten, wobei jeder dieser Halbbehälter durch eine oder mehrere Wände (2, 3) abgegrenzt ist und die unteren respektive oberen Innenränder (4) jedes dieser Halbbehälter eine Hohlkörperformenträgerplatte (5) aufnimmt, auf denen auf auswechselbare Weise eine (oder mehrere) obere (8) respektive untere Hohlkörperform(en) befestigt sind, wobei die Innenseite (10) der oberen (8) und unteren Hohlkörperform(en) ein oder mehrere Formen (11) bildet, deren Form derjenigen des (der) zu formenden Teil (Teile) entspricht, und die Außenseite (12) der oberen (8) Hohlkörperform(en) und der unteren Hohlkörperform(en) mit der oder den Wänden (2, 3) des oberen (1) respektive unteren Halbbehälters geschlossene obere (13) respektive untere Kammern bilden ;
**dadurch gekennzeichnet, dass** sie umfasst :
- erste Einrichtungen (14, 15, 16), um einen Heizfluidstrom in das Innere der Kammern einzuführen, um die Hohlkörperformen (8) zu erhitzen, und um den Heizfluidstrom zu kontrollieren ;
- zweite, zu den ersten Einrichtungen (14, 15, 16) unterschiedliche Einrichtungen (17, 18, 19, 20), um einen Kühlfluidstrom in das Innere der Kammern einzuführen, um die Hohlkörperformen zu kühlen, eventuell um den Kühlfluidstrom über den Hohlkörperformen (8) zu zerstäuben, und um den Kühlfluidstrom zu kontrollieren ;
- dritte, zu den ersten Einrichtungen (14, 15, 16) und den zweiten Einrichtungen (17, 18, 19, 20) unterschiedliche Einrichtungen (21, 22, 23) zur Entleerung der Heiz- und Kühlfluide aus den Kammern.

2. Vorrichtung nach Anspruch 1, bei der die Heiz- und Kühlfluide ausgewählt werden unter den flüssigkeitsförmigen Fluiden und den gasförmigen Fluiden.

3. Vorrichtung nach Anspruch 1 oder 2, bei der das Heizfluid ausgewählt wird unter Wasserdampf, heißem Wasser und Öl.

4. Vorrichtung nach einem der vorhergehenden Ansprüche, bei dem das Kühlfluid ausgewählt wird unter kaltem Wasser und Öl.

5. Vorrichtung nach Anspruch 3 und 4, bei der das Heizfluid und das Kühlfluide Öle sind.

6. Vorrichtung nach Anspruch 3 und 4, bei der das Heizfluid Wasserdampf oder heißes Wasser und das Kühlfluid kaltes Wasser ist.

7. Vorrichtung nach einem der vorhergehenden Ansprüche, bei dem das Kühlfluid eine Flüssigkeit wie zum Beispiel kaltes Wasser ist und über den Hohlkörperformen Einrichtungen zur Zerstäubung des genannten Kühlfluids vorgesehen sind.

8. Vorrichtung nach Anspruch 1, die an einem Rahmen (24) einer Rotationsformmaschine mit zwei simultan um zwei zueinander vorzugweise senkrechte Achsen rotierende Rahmen befestigt werden soll.

9. Vorrichtung nach Anspruch 1, außerdem Einrichtungen zur Herstellung eines Teilvakuums in den Kammern (13) während der Kühlung umfassend, zum Beispiel während der Zerstäubung von kaltem Wasser über den Hohlkörperformen.

10. Vorrichtung nach einem der vorhergehenden Ansprüche, außerdem Einrichtungen zur Herstellung eines Überdrucks in den Kammern (13) während der Erhitzung zum Beispiel mit Dampf umfassend.

11. Vorrichtung nach einem der vorhergehenden Ansprüche, außerdem Einrichtungen zum Injizieren eines kalten Gases wie etwa Luft während der Kühlung direkt ins Innere der Formen (11) umfassend.

12. Vorrichtung nach einem der vorhergehenden Ansprüche, mehrere gleiche oder unterschiedliche obere Hohlkörperformen und mehrere gleiche oder unterschiedliche untere Hohlkörperformen umfassend.

13. Vorrichtung nach Anspruch 10, bei der die Hohlkörperformen unterschiedlich sind wegen ihrer Form und/oder ihrer Größe und/oder dem sie bildenden Material.

14. Vorrichtung nach einem der vorhergehenden Ansprüche, bei dem die obere(n) Hohlkörperform(en) einerseits und die untere(n) Hohlkörperform(en) andrerseits paarweise symmetrisch sind.

15. Vorrichtung nach einem der vorhergehenden Ansprüche, bei dem die Einrichtungen zur Einführung - in das Innere der Kammern - eines Heizfluidstroms, zum Beispiel aus Wasserdampf, um die Hohlkörperform(en) zu erhitzen und um den Heizfluidstrom, zum Beispiel aus Wasserdampf, zu kontrollieren, insbesondere zu unterbrechen, eine oder mehrere Versorgungsleitungen (14) für Heizfluid, zum Beispiel Wasserdampf, umfassen, mit Ventilen (15), wobei die Leitung(en) (14) die Wand (2) von mindestens einer der Kammern (13) durchqueren und ein (oder mehrere) Düsenrohr(e) (16), angeordnet in wenigstens einer der Kammern (13) zur Verteilung von Heizfluid, zum Beispiel Wasserdampf, versorgen.

16. Vorrichtung nach einem der vorhergehenden Ansprüche, bei dem die Einrichtungen zur Einführung - in das Innere der Kammern - eines Kühlfluidstroms, zum Beispiel aus kaltem Wasser, um die Hohlkörperform(en) zu kühlen, und eventuell um das Kühlfluid, zum Beispiel kaltes Wasser, über der (den) Hohlkörperform(en) zu zerstäuben, und um den Kühlfluidstrom, zum Beispiel kaltes Wasser, zu kontrollieren, insbesondere zu unterbrechen, eine oder mehrere Versorgungsleitungen (17) für Kühlfluid, zum Beispiel kaltes Wasser, umfassen, mit Ventilen (18), wobei die Leitung(en) (17) die Wand (2) von mindestens einer der Kammern (13) durchqueren und ein (oder mehrere) vorzugsweise mit Zerstäubungsdüsen (20) versehenen Düsenrohr(e) (19), angeordnet in wenigstens einer der Kammern (13), zur Verteilung von Kühlfluid, zum Beispiel kaltes Wasser, versorgen.

17. Vorrichtung nach einem der vorhergehenden Ansprüche, bei dem die Einrichtungen zur Entleerung der Fluide - zum Beispiel Wasser und der kondensierte Wasserdampf - aus den Kammern eine (oder mehrere) Ausgangsleitung(en) (21) umfassen, jede versehen mit einem Ausgangsventil (23).

18. Vorrichtung nach einem der vorhergehenden Ansprüche, außerdem einen oder mehrere Rahmen umfassend, zum Beispiel von rechteckiger Form, befestigt zwischen den Halbbehältern und fähig, die Hohlkörperformenträger aufzunehmen.

19. Rotationsformmaschine, umfassend wenigstens eine Formvorrichtung nach einem der vorhergehenden Ansprüche.

20. Verfahren zum Formen wenigstens eines Teils mit der Rotationsformmaschine nach Anspruch 19, umfassend wenigstens einen Heizschritt und wenigstens einen Kühlschritt.

21. Verfahren nach Anspruch 20, bei dem das geformte Teil ein Teil aus einem härtbaren Polymer wie zum Beispiel dem Polyurethan ist.

22. Verfahren nach einem der Ansprüche 20 und 21, bei dem man während des Heizschritts in den Kammern einen Überdruck erzeugt und ein Heizfluid in der Dampfphase, wie zum Beispiel Wasserdampf, benutzt, und man während des Kühlschritts in den Kammern ein Teilvakuum herstellt.
